# EUROPEAN PATENT SPECIFICATION

(11) **EP 3 279 991 B1**
(45) Date of publication and mention of the grant of the patent: **01.11.2023**
(21) Application number: 16771631.5
(22) Date of filing: 08.03.2016
(51) Int. Cl.: H01M 8/04, H01M 8/04225, H01M 8/04302, H01M 8/04029, H01M 8/04746, H01M 8/1018, H01M 8/04664

(54) **FUEL CELL SYSTEM AND OPERATION METHOD THEREFOR**
BRENNSTOFFZELLENSYSTEM UND BETRIEBSVERFAHREN DAFÜR
SYSTÈME DE PILE À COMBUSTIBLE ET SON PROCÉDÉ DE FONCTIONNEMENT

(30) Priority: 30.03.2015 JP 2015067876
(43) Date of publication of application: 07.02.2018
(73) Proprietor: Panasonic Intellectual Property Management Co., Ltd., Osaka-shi, Osaka 540-6207 (JP)
(72) Inventor: YONEKURA, Kenji, Osaka-shi. Osaka 540-6207 (JP); TSUYUGUCHI, Kohei, Osaka-shi, Osaka 540-6207 (JP); YOSHIMURA, Akihisa, Osaka-shi, Osaka 540-6207 (JP); NAKAMURA, Akinari, Osaka-shi, Osaka 540-6207 (JP)
(74) Representative: Grünecker Patent- und Rechtsanwälte PartG mbB
(86) International application number: PCT/JP2016/001251
(87) International publication number: WO 2016/157737

(56) References cited:
- DE-A1-102013 221 413
- JP-A- 2002 343 396
- JP-A- 2013 229 140
- JP-A- 2014 086 156
- JP-A- 2014 086 156
- JP-A- 2014 086 157
- US-A1- 2003 152 816
- US-A1- 2006 263 651

## Description

### TECHNICAL FIELD

The present invention relates to a fuel cell system which includes a circulation channel through which cooling water circulates to exchange heat with a fuel cell, and further relates to an operation method for the fuel cell system.

### BACKGROUND ART

A conventional fuel cell system of the type described above includes a fuel cell which generates electricity by utilizing electrochemical reaction (exothermic reaction) between oxygen contained in air, and hydrogen contained in fuel gas as a main component of the fuel gas.

The exothermic reaction of the fuel cell proceeds during electricity generation. The fuel cell therefore has a configuration for maintaining an operation temperature at a temperature appropriate for the exothermic reaction (e.g., approximately from 60°C to 80°C) during electricity generation. More specifically, the fuel cell of the fuel cell system includes a cooling water circulation channel through which cooling water circulates by pumping of a pump provided in the cooling water circulation channel. A constant internal temperature of the fuel cell is thus maintained during electricity generation.

According to the fuel cell system described above, air dissolved in cooling water generally appears as bubbles (air) with a rise of a temperature of cooling water circulating through the cooling water circulation channel. Moreover, after an elapse of a long time from a stop of the fuel cell system, air may accumulate in the cooling water circulation channel. Furthermore, air enters the cooling water circulation channel during initial water filling for filling the cooling water circulation channel with water after installation of the fuel cell system. The air having entered the cooling water circulation channel does not easily go out from the cooling water circulation channel. When the air remaining in the cooling water is caught by the pump, air entrainment is caused during pumping and a pumping function of the pump deteriorates.

Accordingly, there has been proposed a fuel cell system configured to intermittently operate a circulation pump of a cooling water circulation channel to remove air from the cooling water circulation channel as illustrated in FIG. 5 (e.g., see PTL 1).

FIG. 5 is a schematic view illustrating a configuration of a fuel cell system disclosed in PTL 1.

As illustrated in FIG. 5, fuel cell system 101 according to PTL 1 includes fuel cell 102, circulation channel 103, circulation pump 104, cooling water tank 105, heat exchanger 106, and controller 107. Fuel cell 102 generates electricity from fuel gas and oxidant gas containing oxygen. Circulation channel 103 is a channel through which cooling water circulates to recover heat generated during electricity generation by fuel cell 102. Circulation pump 104 is provided in a course of circulation channel 103 to circulate cooling water. Cooling water tank 105 is provided in the course of circulation channel 103 to store cooling water. Heat exchanger 106 is provided in the course of circulation channel 103 to recover waste heat from cooling water. Controller 107 controls operations of circulation pump 104 and the like.

More specifically, controller 107 intermittently operates circulation pump 104 when determining that removal of air from circulation channel 103 is required before a start of electricity generation or during electricity generation by fuel cell 102. This operation removes air remaining in circulation channel 103 to prevent functional deterioration of circulation pump 104.

However, according to fuel cell system 101 described above, an internal temperature of fuel cell 102 increases when circulation pump 104 stops for a certain period or longer to remove air during electricity generation of fuel cell 102. In this case, the temperature of fuel cell 102 may increase in excess of respective heatproof temperatures of components constituting fuel cell 102.

JP 2014 086157 A relates to a fuel cell cogeneration system and US 2006/263651 A1 relates to a method of operating a fuel cell system.

### Citation List

### Patent Literature

PTL 1: Unexamined Japanese Patent Application Publication No. 2014-086156

### SUMMARY OF THE INVENTION

The present invention provides a fuel cell system capable of more reliably removing air remaining in a circulation channel to prevent thermal deterioration of constituent elements of a fuel cell, and an operation method for the fuel cell system. A fuel cell system according to the invention is defined in claim 1 and an operation method according to the invention is defined in claim 5.

More specifically, when a stop time is defined as a time from an operation stop to an operation restart of an intermittent operation of a circulation pump which delivers a heat medium for heat exchange with a fuel cell according to a fuel cell system of the present invention, a second stop time corresponding to a stop time of the intermittent operation during electricity generation by the fuel cell is made shorter than a first stop time corresponding to a stop time of the intermittent operation during a start of the fuel cell.

According to this configuration, the circulation pump stops for the first stop time for sufficiently removing air accumulating in a circulation channel during water filling for filling the circulation channel with water as the heat medium during the start of the fuel cell. Thereafter, the circulation pump restarts after an elapse of the first stop time to execute the intermittent operation for repeating the stop and restart of the operation of the circulation pump. On the other hand, during electricity generation by the fuel cell, the circulation pump stops for the second stop time during which an internal temperature of the fuel cell does not exceed heatproof temperatures of constituent elements of the fuel cell, the second stop time being shorter than the first stop time. Thereafter, the circulation pump restarts after an elapse of the second stop time to execute the intermittent operation for repeating the stop and restart of the operation of the circulation pump.

Accordingly, air remaining in the circulation channel can be more reliably removed, and thermal deterioration of constituent elements of the fuel cell can be prevented.

### BRIEF DESCRIPTION OF DRAWINGS

FIG. 1 is a schematic view illustrating a fuel cell system according to a first exemplary embodiment of the present invention.
FIG. 2 is a flowchart showing an operation of a water-filling step performed by the fuel cell system according to the first exemplary embodiment to fill the circulation channel with water.
FIG. 3 is a flowchart showing an air removal operation performed by the fuel cell system according to the first exemplary embodiment to remove air from the circulation channel during electricity generation.
FIG. 4 is a flowchart showing an air removal operation performed by the fuel cell system according to a second exemplary embodiment of the present invention to remove air from the circulation channel during electricity generation.

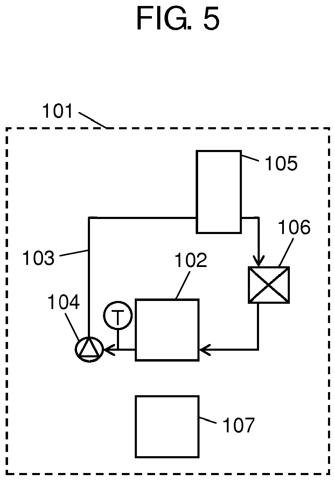

FIG. 5 is a schematic view illustrating a conventional fuel cell system.

### DESCRIPTION OF EMBODIMENTS

Exemplary embodiments according to the present invention are hereinafter described with reference to the drawings. The present invention is not limited to the exemplary embodiments presented herein.

### FIRST EXEMPLARY EMBODIMENT

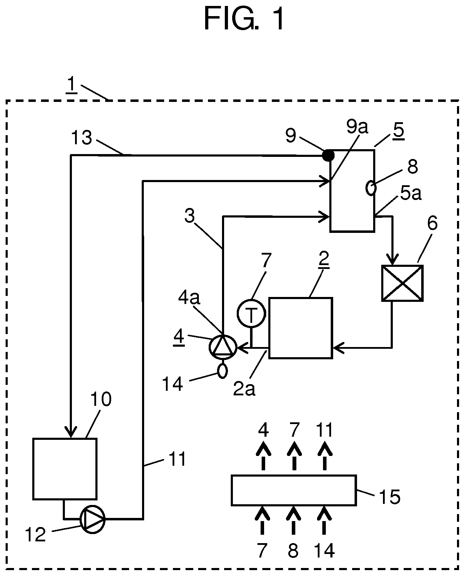

Fuel cell system 1 according to a first exemplary embodiment of the present invention is hereinafter described with reference to FIG. 1.

FIG. 1 is a schematic view illustrating an example of a configuration of the fuel cell system according to the first exemplary embodiment of the present invention.

As illustrated in FIG. 1, fuel cell system 1 according to the present exemplary embodiment includes fuel cell 2, circulation channel 3, circulation pump 4, cooling water tank 5, and heat exchanger 6.

Circulation channel 3 sequentially connects fuel cell 2, circulation pump 4, cooling water tank 5, and heat exchanger 6 in an annular shape. Circulation channel 3 is a channel through which cooling water circulates to recover heat generated during electricity generation by fuel cell 2. Cooling water flows within circulation channel 3 by pumping of circulation pump 4, while passing through fuel cell 2, circulation pump 4, cooling water tank 5, and heat exchanger 6 in this order.

Fuel cell 2 generates electricity by utilizing electrochemical reaction (exothermic reaction) between fuel gas containing hydrogen, and oxidant gas containing oxygen.

Circulation pump 4 is disposed in a course of circulation channel 3 on a downstream side of fuel cell 2 in a flow direction of cooling water (i.e., in such a state that a suction side of circulation pump 4 faces fuel cell 2). Circulation pump 4 circulates cooling water within circulation channel 3. Circulation pump 4 is configured by a volute pump which hardly causes pulsation and the like, for example.

Cooling water tank 5 is disposed in the course of circulation channel 3 on an outlet side (downstream side) of circulation pump 4, i.e., discharge port 4a side of circulation pump 4 to store cooling water.

Heat exchanger 6 is disposed in the course of circulation channel 3 on an outlet side (downstream side) of cooling water tank 5, i.e., outlet port 5a side of cooling water tank 5. Heat exchanger 6 cools cooling water heated by fuel cell 2, and conducts recovered heat to heat recovery water provided as a heat medium.

Cooling water temperature sensor 7 is provided in the course of circulation channel 3 between fuel cell 2 and circulation pump 4 to detect a temperature of cooling water flowing from outlet portion 2a of fuel cell 2.

Cooling water tank 5 includes water level sensor 8 and drain port 9. Water level sensor 8 detects a water level of cooling water within cooling water tank 5. Drain port 9 is provided near an upper part of a side wall of cooling water tank 5 to discharge cooling water to drain channel 13 when the cooling water overflows from cooling water tank 5.

Cooling water tank 5 is disposed near a highest position of circulation channel 3. This arrangement allows air accumulating in circulation channel 3 to be removed outside via cooling water tank 5. On the other hand, outlet port 5a through which cooling water is supplied from cooling water tank 5 to heat exchanger 6 is disposed at a position lower than inlet port 9a of cooling water tank 5.

As illustrated in FIG. 1, fuel cell system 1 further includes condensed water tank 10, cooling water supply channel 11, cooling water supply pump 12, and drain channel 13.

Condensed water tank 10 stores condensed water obtained by condensing water contained in exhaust air and exhaust gas discharged from fuel cell 2. Cooling water supply channel 11 supplies condensed water present in condensed water tank 10 to cooling water tank 5. Cooling water supply pump 12 is disposed in a course of cooling water supply channel 11 to deliver (supply) condensed water from condensed water tank 10 to cooling water tank 5 via inlet port 9a. Drain channel 13 functions as a channel through which cooling water overflowing from drain port 9 of cooling water tank 5 returns to condensed water tank 10.

According to fuel cell system 1 of the present exemplary embodiment, cooling water contained in both cooling water tank 5 and condensed water tank 10 is opened to the atmosphere via cooling water tank 5, drain port 9, drain channel 13, and condensed water tank 10. As described above, it is preferable that cooling water tank 5 is disposed at the highest position of fuel cell system 1 to separate air accumulated in circulation channel 3 from liquid and discharge the air in a state separated from liquid. This arrangement allows the air to spontaneously rise due to a small density of the air, and to be discharged to the outside.

Rotation detector 14 is provided inside circulation pump 4 to detect a rotation speed of circulation pump 4. It is preferable that discharge port 4a of circulation pump 4 faces upward to allow air accumulated within circulation pump 4 to go out.

Controller 15 of fuel cell system 1 controls at least circulation pump 4 and cooling water supply pump 12. Controller 15 detects a cooling water temperature based on detection by cooling water temperature sensor 7, and presence or absence of a predetermined amount of cooling water within cooling water tank 5 based on detection by water level sensor 8. Controller 15 further detects the rotation speed of circulation pump 4 based on detection by rotation detector 14. Accordingly, controller 15 controls circulation pump 4 and cooling water supply pump 12 based on the detected cooling water temperature, presence or absence of cooling water, and rotation speed.

Fuel cell system 1 according to the present exemplary embodiment is configured as described above.

A specific operation of fuel cell system 1 according to the present exemplary embodiment is hereinafter described.

Fuel cell system 1 supplies fuel gas containing a large amount of hydrogen, and oxidant gas containing oxygen to fuel cell 2 to generate electricity. Fuel cell 2 generates DC power by electricity generation, and outputs the DC power. The DC power output from fuel cell 2 is converted into AC power by an inverter (not-illustrated). The converted AC power is supplied to a load (e.g., electric device for home use) in cooperation with a power system.

On the other hand, heat is generated by exothermic reaction during electricity generation by fuel cell 2. Circulation pump 4 therefore circulates and supplies cooling water from circulation channel 3 to fuel cell 2 under control by controller 15. Fuel cell 2 is thus cooled by heat exchange between heat generated within fuel cell 2 and cooling water. In this case, controller 15 gives feedback to circulation pump 4 to control the temperature of the cooling water such that the temperature detected by cooling water temperature sensor 7 is approximately 70°C, for example.

Fuel cell system 1 according to the present exemplary embodiment operates in the manner described above.

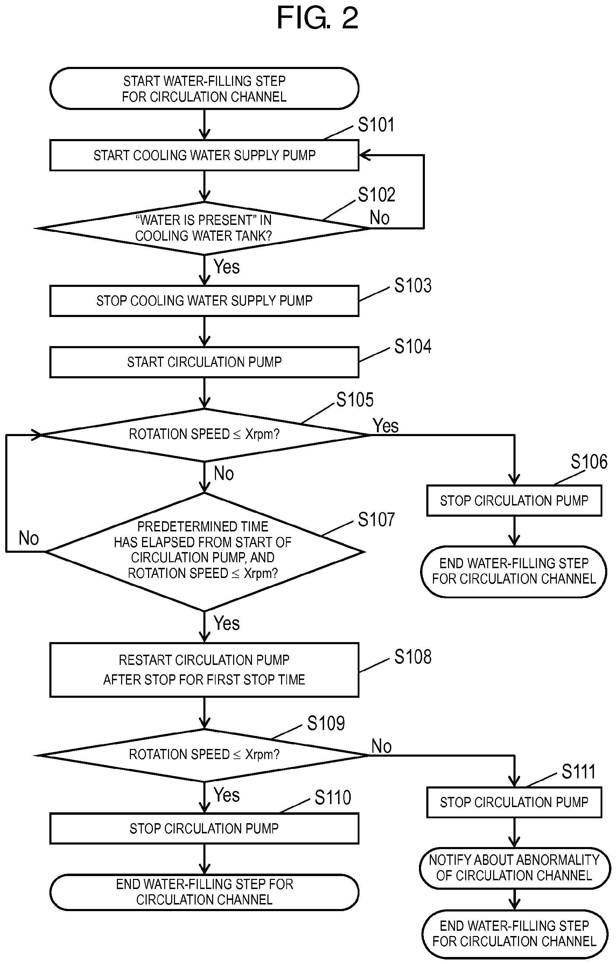

Hereinafter, description is made with reference to FIG. 2 on an operation in a water-filling step performed by fuel cell system 1 according to the present exemplary embodiment to fill circulation channel 3 with water. This water-filling step is executed during a start of fuel cell 2.

FIG. 2 is a flowchart showing an operation of the water-filling step performed by the fuel cell system according to the first exemplary embodiment to fill the circulation channel with water.

As shown in FIG. 2, controller 15 initially starts cooling water supply pump 12 in response to a start of the water-filling step for filling circulation channel 3 with water. Cooling water supply pump 12 draws up water (condensed water) stored in condensed water tank 10, and supplies the water to cooling water tank 5 via cooling water supply channel 11 (step S101).

Thereafter, controller 15 detects whether or not a predetermined amount of water is present within cooling water tank 5 based on detection by water level sensor 8 (step S102). When it is determined that the predetermined amount of "water is absent" within cooling water tank 5 (NO in step S102), the determination in step S102 is repeated until it is determined that the predetermined amount of "water is present".

On the other hand, when it is determined that the predetermined amount of "water is present" within cooling water tank 5 (YES in step S102), controller 15 stops cooling water supply pump 12 (step S103).

Each of fuel cell 2 and heat exchanger 6 has large water flow resistance to acquire corresponding performance. Accordingly, when air is accumulated in circulation channel 3, circulation channel 3 cannot be filled with cooling water even if cooling water is supplied to cooling water tank 5.

To overcome this problem, circulation pump 4 increases a lifting height under control by controller 15 after a stop of cooling water supply pump 12 (step S104). In this manner, an air removal operation is performed to remove air from circulation channel 3. When circulation pump 4 is not filled with water by presence of air accumulated in circulation channel 3, circulation pump 4 idles. In this case, the rotation speed of circulation pump 4 detected by rotation detector 14 increases. Thus, whether or not air removal operation to remove air from circulation channel 3 is required is determined as specifically described below.

More specifically, controller 15 determines whether or not the rotation speed of circulation pump 4 is X (rpm) or lower (step S105) based on detection by rotation detector 14. Rotation speed X (rpm) corresponds to a maximum rotation speed of circulation pump 4 not in an idling state. When a rotation speed of X (rpm) or lower is detected (YES in step S105), it is determined that circulation pump 4 is not in the idling state. In this case, controller 15 stops circulation pump 4 (step S106). The water-filling step for filling circulation channel 3 with water is therefore completed, and the processing proceeds to a not-shown electricity generation step performed by fuel cell 2.

On the other hand, when the rotation speed of circulation pump 4 exceeds X (rpm) (NO in step S105), controller 15 determines whether or not a predetermined time has elapsed from the start of circulation pump 4, and whether or not the rotation speed of circulation pump 4 is X (rpm) or lower (step S107). When the rotation speed exceeds X (rpm) before the elapse of the predetermined time (NO in step S107), the processing returns to step S105 to execute the processes in and after step S105. The predetermined time from the start in this step is set to approximately 60 seconds, for example.

On the other hand, when the rotation speed is X (rpm) or lower after the elapse of the predetermined time (YES in step S107), controller 15 executes an intermittent operation (corresponding to first operation or first operation step) which repeats a stop of circulation pump 4 for a first stop time, and a subsequent restart of the operation of circulation pump 4 (step S108). The first stop time in this step is a stop time from an operation stop to an operation restart of circulation pump 4 during the intermittent operation. The first stop time is set to approximately 30 seconds, for example.

During continuous operation of circulation pump 4 in a normal condition, air tends to accumulate at a center of circulation pump 4. Accordingly, the operation of circulation pump 4 is temporarily stopped for the first stop time in step S108. This stop allows air accumulating at the center of circulation pump 4 to flow within circulation channel 3 during the stop of circulation pump 4, and efficiently go out from circulation channel 3.

Thereafter, controller 15 determines whether or not the rotation speed detected by rotation detector 14 is X (rpm) or lower (step S109). This step again determines whether or not air has been removed by the intermittent operation performed during the first operation or the first operation step in step S108. When a rotation speed of X (rpm) or lower is detected (YES in step S109), controller 15 determines that circulation pump 4 is not in the idling state. In this case, controller 15 stops circulation pump 4 (step S110). The water-filling step for filling circulation channel 3 with water is therefore completed, and the processing proceeds to a not-shown electricity generation step performed by fuel cell 2.

On the other hand, when the rotation speed of circulation pump 4 exceeds X (rpm) even after execution of the intermittent operation by circulation pump 4 in step S108 (NO in step S109), controller 15 determines that circulation channel 3 is in an abnormal condition, and stops circulation pump 4 (step S111). Thereafter, controller 15 issues notification about the abnormal condition of circulation channel 3 to the outside, and ends the water-filling step for filling circulation channel 3 with water. In this case, the notification about the abnormal condition may be an alarm display on a display unit provided on fuel cell system 1, or a sound, for example.

The water-filling step for filling circulation channel 3 with water is executed by fuel cell system 1 in the manner described above.

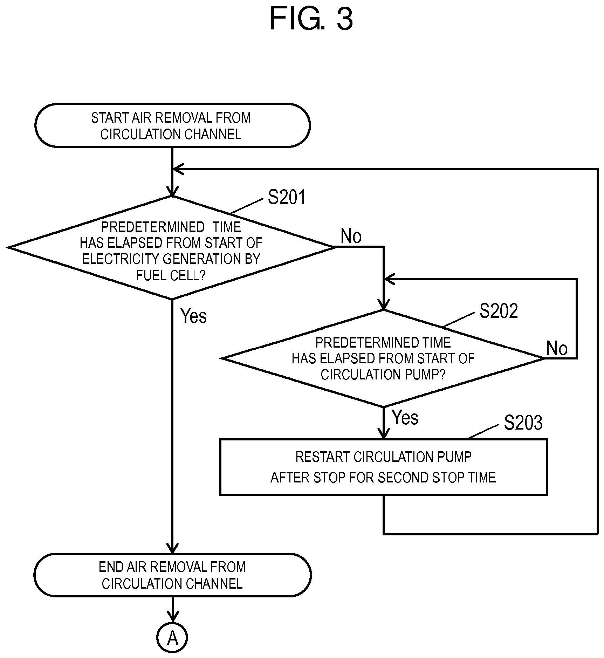

Hereinafter, description is made with reference to FIG. 3 on the air removal operation performed by fuel cell 2 of fuel cell system 1 to remove air from circulation channel 3 during electricity generation.

FIG. 3 is a flowchart showing the air removal operation performed by the fuel cell system according to the first exemplary embodiment to remove air from the circulation channel during electricity generation.

As shown in FIG. 3, controller 15 initially determines whether or not a predetermined time has elapsed from a start of electricity generation, in response to a start of the air removal operation for removing air from circulation channel 3 during electricity generation by fuel cell 2 (step S201). The predetermined time from electricity generation in this step is set to approximately 30 minutes, for example.

When it is determined that the predetermined time has not elapsed from the start of electricity generation (NO in step S201), controller 15 determines whether or not a predetermined time has elapsed from a start of circulation pump 4 (step S202). The predetermined time from the start in this step is set to approximately 5 minutes.

When it is determined that the predetermined time has elapsed from the start of circulation pump 4 (YES in step S202), controller 15 executes an intermittent operation (corresponding to second operation or second operation step) which repeats a stop of circulation pump 4 for a second stop time, and a subsequent restart of the operation of circulation pump 4 (step S203). The second stop time in this step is a stop time from an operation stop to an operation restart of circulation pump 4 during the intermittent operation. The second stop time is set to approximately 3 seconds, for example. Accordingly, the second stop time is set shorter than the first stop time as described above.

Thereafter, the processing returns to step S201 to determine whether or not the predetermined time has elapsed from the start of electricity generation, and sequentially repeats the processes in and after step S201.

On the other hand, when it is determined that the predetermined time has elapsed from the start of electricity generation by fuel cell 2 (YES in step S201), the air removal operation for removing air from circulation channel 3 during electricity generation ends.

During continuous operation of circulation pump 4, air tends to accumulate at the center of circulation pump 4. Accordingly, the intermittent operation for repeating a temporary stop of the operation of circulation pump 4 for the second stop time is executed in step S203. This stop allows air accumulating at the center of circulation pump 4 to flow within circulation channel 3 during the stop of circulation pump 4, and efficiently go out from circulation channel 3.

Hereinafter, description is made on a relationship between the first stop time and the second stop time during the intermittent operation of circulation pump 4 described with reference to FIGS. 2 and 3.

An amount of air remaining in circulation channel 3 during electricity generation by fuel cell 2 described with reference to FIG. 3 is smaller than an amount of air remaining in circulation channel 3 during the water-filling step described with reference to FIG. 2.

Accordingly, the second stop time (approximately 3 seconds as described above) for stopping circulation pump 4 in the intermittent operation during electricity generation by fuel cell 2 is set shorter than the first stop time (approximately 30 seconds as described above) for stopping circulation pump 4 in the intermittent operation during the water-filling step according to the present exemplary embodiment. In this case, the second stop time is set to such a time that the temperature of fuel cell 2 during electricity generation does not exceed respective heatproof temperatures of the constituent elements of fuel cell 2 during a stop of circulation pump 4. Accordingly, thermal deterioration of the constituent elements of fuel cell 2 can be prevented.

According to the present exemplary embodiment, as described above, circulation pump 4 stops for the first stop time for sufficiently removing air accumulating in circulation channel 3 during a start of fuel cell 2 (i.e., during water-filling step for filling circulation channel 3 with cooling water). Thereafter, the operation of circulation pump 4 restarts to repeat the stop and restart of the operation of circulation pump 4. In other words, circulation pump 4 performs the intermittent operation corresponding to the first operation.

On the other hand, during electricity generation by fuel cell 2, circulation pump 4 stops for the second stop time during which the internal temperature of fuel cell 2 does not exceed the heatproof temperatures of the constituent elements of fuel cell 2. Thereafter, the operation of circulation pump 4 restarts to repeat the stop and restart of the operation of circulation pump 4. In other words, circulation pump 4 performs an intermittent operation corresponding to the second operation. Accordingly, air remaining in circulation channel 3 can be efficiently removed. Moreover, thermal deterioration of the constituent elements of fuel cell 2 can be prevented.

Furthermore, according to the present exemplary embodiment, circulation pump 4 always stops for the second stop time before the elapse of the predetermined time after the start of electricity generation by fuel cell 2 as shown in FIG. 3. Thereafter, the operation of circulation pump 4 restarts to execute the intermittent operation for repeating the stop and restart of circulation pump 4. Accordingly, air remaining in circulation channel 3 can be effectively removed at a start of electricity generation by fuel cell 2. Moreover, thermal deterioration of the constituent elements of fuel cell 2 can be prevented.

### SECOND EXEMPLARY EMBODIMENT

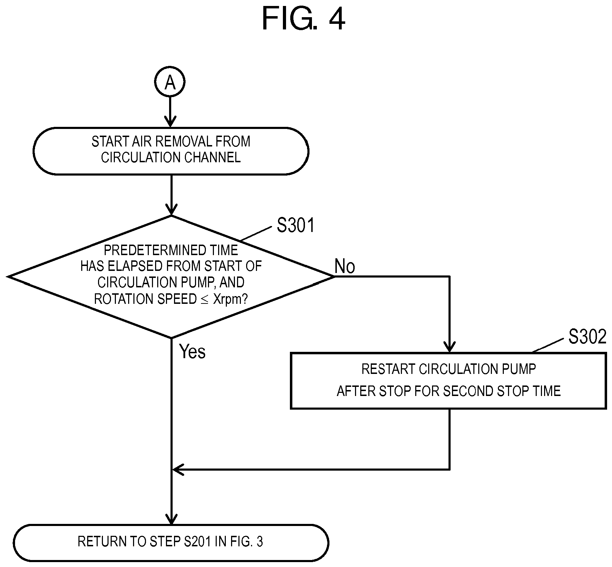

Fuel cell system 1 according to a second exemplary embodiment of the present invention is hereinafter described with reference to FIG. 4.

FIG. 4 is a flowchart showing an air removal operation performed by the fuel cell system according to the second exemplary embodiment of the present invention to remove air from the circulation channel during electricity generation.

As shown in FIG. 4, the second exemplary embodiment is different from the first exemplary embodiment in that an air removal operation for removing air from circulation channel 3 is again executed after the air removal operation performed for removing air from circulation channel 3 during electricity generation and described in the first exemplary embodiment with reference to FIG. 3. Other constituent elements are similar to the corresponding constituent elements in the first exemplary embodiment. Accordingly, constituent elements identical or equivalent to the corresponding constituent elements in the first exemplary embodiment have been given the same reference numbers, and description thereof is not repeated herein.

According to fuel cell system 1 of the present exemplary embodiment, the processing proceeds to A indicated in FIG. 3 after the end of the air removal operation for removing air from circulation channel 3 during electricity generation by fuel cell 2 shown in FIG. 3. Thereafter, an air removal operation (second operation) for removing air from circulation channel 3 from A indicated in FIG. 4 is again executed in a following manner.

As shown in FIG. 4, controller 15 initially determines whether or not a predetermined time has elapsed from the start of circulation pump 4, and whether or not the rotation speed of circulation pump 4 detected by rotation detector 14 is X (rpm) or lower (step S301). The predetermined time from the start in this step is set to approximately 5 minutes.

When the rotation speed exceeds X (rpm) before an elapse of the predetermined time from the start of circulation pump 4 (NO in step S301), controller 15 determines that circulation pump 4 is in the idling state. In other words, controller 15 determines that output abnormality of circulation pump 4 has been caused. In this case, controller 15 executes an intermittent operation (corresponding to second operation or second operation step) which repeats a stop of circulation pump 4 for the second stop time, and a subsequent restart of circulation pump 4 (step S302). The second stop time in this step is a stop time from an operation stop to an operation restart of circulation pump 4 during the intermittent operation.

Thereafter, the processing returns to step S201 shown in FIG. 3 to determine whether or not the predetermined time has elapsed from the start of electricity generation by fuel cell 2, and repeats the processes in and after step S201 to complete the air removal operation (second operation) for removing air from circulation channel 3. Although not shown in the figure, the air removal operation for removing air from circulation channel 3 may be ended after execution of the air removal operation for removing air from circulation channel 3 (second operation) shown in FIG. 4.

On the other hand, when the rotation speed is X (rpm) or lower after the elapse of the predetermined time from the start of circulation pump 4 (YES in step S301), the processing returns to step S201 to start the air removal operation for removing air from circulation channel 3 shown in FIG. 3, and executes the processes in and after step S201 to complete the air removal operation for removing air from circulation channel 3.

According to the present exemplary embodiment as described above, when controller 15 determines that circulation pump 4 is in the idling state after the end of the air removal operation for removing air from circulation channel 3 (second operation) shown in FIG. 3, the second operation is again executed to stop circulation pump 4 for the second stop time. Thereafter, controller 15 restarts of the operation of circulation pump 4 to execute the intermittent operation (corresponding to second operation or second operation step) for repeating a stop and a restart of the operation of circulation pump 4. Accordingly, air remaining in circulation channel 3 can be further removed. Moreover, thermal deterioration of the constituent elements of fuel cell 2 can be effectively prevented.

According to the present exemplary embodiment, the air removal operation for removing air from circulation channel 3 described with reference to FIG. 4 is executed after the air removal operation for removing air from circulation channel 3 described with reference to FIG. 3. However, the present exemplary embodiment is not limited thereto. For example, the air removal operation for removing air from circulation channel 3 may be executed in accordance with individual situations. More specifically, the air removal operation may be executed only when the rotation speed is a predetermined speed or higher. In this case, air can be more efficiently removed from circulation channel 3.

As described above, a fuel cell system according to the present invention includes: a fuel cell; a circulation channel through which a heat medium circulates to exchange heat with the fuel cell; a circulation pump that delivers the heat medium to the circulation channel; and a controller that controls the circulation pump. The controller performs a first operation for intermittently operating the circulation pump during a start of the fuel cell, and a second operation for intermittently operating the circulation pump during electricity generation by the fuel cell. When a stop time is defined as a time from an operation stop to an operation restart of the circulation pump during an intermittent operation, the controller may control the first operation and the second operation such that a second stop time corresponding to the stop time of the second operation is shorter than a first stop time corresponding to the stop time of the first operation.

According to this configuration, the circulation pump stops for the first stop time for sufficiently removing air accumulating in the circulation channel during water filling for filling the circulation channel with water as the heat medium during the start of the fuel cell. Thereafter, the circulation pump restarts after an elapse of the first stop time to execute the intermittent operation (first operation) for repeating the stop and restart of the operation of the circulation pump. On the other hand, during electricity generation by the fuel cell, the circulation pump stops for the second stop time during which an internal temperature of the fuel cell does not exceed heatproof temperatures of constituent elements of the fuel cell. Thereafter, the circulation pump restarts after an elapse of the second stop time to execute the intermittent operation (second operation) for repeating the stop and restart of the operation of the circulation pump.

Accordingly, air remaining in the circulation channel can be more reliably removed, and thermal deterioration of constituent elements of the fuel cell can be prevented.

The controller of the fuel cell system according to the present invention may perform the second operation for a predetermined time after a start of electricity generation by the fuel cell. In this case, air remaining in the circulation channel can be more reliably removed, and thermal deterioration of constituent elements of the fuel cell can be prevented.

The controller of the fuel cell system according to the present invention may perform the second operation when output abnormality of the circulation pump is caused. In this case, wasteful execution of the second operation (intermittent operation of circulation pump) is not required during electricity generation by the fuel cell.

The controller of the fuel cell system according to the present invention may further perform the second operation when output abnormality of the circulation pump is caused after execution of the second operation for a predetermined time from a start of electricity generation by the fuel cell. In this case, air remaining in the circulation channel can be more reliably removed, and thermal deterioration of constituent elements of the fuel cell can be prevented.

The present invention is also directed to an operation method for a fuel cell system that includes a fuel cell, a circulation channel through which a heat medium circulates to exchange heat with the fuel cell, and a circulation pump that delivers the heat medium to the circulation channel. The operation method for the fuel cell system includes a first operation step for intermittently operating the circulation pump during a start of the fuel cell, and a second operation step for intermittently operating the circulation pump during electricity generation by the fuel cell. When a stop time is defined as a time from an operation stop to an operation restart of the circulation pump during an intermittent operation, the operation method for the fuel cell system may be performed such that a second stop time corresponding to the stop time of the second operation step is shorter than a first stop time corresponding to the stop time of the first operation step.

According to this operation method, the pump stops for the first stop time for sufficiently removing air accumulating in the circulation channel during water filling for filling the circulation channel with water as the heat medium during the start of the fuel cell. Thereafter, the circulation pump restarts after an elapse of the first stop time to execute the intermittent operation (first operation step) for repeating the stop and restart of the operation of the circulation pump. On the other hand, during electricity generation by the fuel cell, the circulation pump stops for the second stop time during which an internal temperature of the fuel cell does not exceed heatproof temperatures of constituent elements of the fuel cell. Thereafter, the circulation pump restarts after an elapse of the second stop time to execute the intermittent operation (second operation step) for repeating the stop and restart of the operation of the circulation pump.

In this case, air remaining in the circulation channel can be more reliably removed, and thermal deterioration of constituent elements of the fuel cell can be prevented.

### INDUSTRIAL APPLICABILITY

According to the present invention, air remaining in a circulation channel can be more reliably removed, and thermal deterioration of constituent elements of a fuel cell can be prevented. Accordingly, the fuel cell system of the present invention is a useful system applicable to a fuel cell system which includes a circulation channel through which cooling water circulates to exchange heat with a fuel cell, for example.

### REFERENCE MARKS IN THE DRAWINGS

1, 101: fuel cell system
2, 102: fuel cell
2a: outlet portion
3, 103: circulation channel
4, 104: circulation pump
4a: discharge port
5, 105: cooling water tank
5a: outlet port
6, 106: heat exchanger
7: cooling water temperature sensor
8: water level sensor
9: drain port
9a: inlet port
10: condensed water tank
11: cooling water supply channel
12: cooling water supply pump
13: drain channel
14: rotation detector
15, 107: controller

## Claims

1. A fuel cell system comprising:
a fuel cell (2);
a circulation channel (3) through which a heat medium circulates to exchange heat with the fuel cell (2);
a circulation pump (4) that delivers the heat medium to the circulation channel (3); and
a controller (15) that controls the circulation pump (4),
**characterized in that**
the controller (15) performs a first operation for intermittently operating the circulation
pump (4) during filling the circulation channel with water as a heat medium during a start of the fuel cell (2), and a second operation for intermittently operating the circulation pump (4) during electricity generation by the fuel cell (2), and
when a stop time is defined as a predetermined time from an operation stop to an operation restart of the circulation pump (4) during an intermittent operation, the controller (15) controls the first operation and the second operation such that a second stop time corresponding to the stop time of the second operation is shorter than a first stop time corresponding to the stop time of the first operation.

2. The fuel cell system according to claim 1, wherein the controller (15) performs the second operation for a predetermined time after a start of electricity generation by the fuel cell (2).

3. The fuel cell system according to claim 1, wherein the controller (15) performs the second operation when output abnormality of the circulation pump (4) is caused.

4. The fuel cell system according to claim 1, wherein the controller (15) further performs the second operation when output abnormality of the circulation pump (4) is caused after execution of the second operation for a predetermined time from a start of electricity generation by the fuel cell (2).

5. An operation method for a fuel cell system that includes a fuel cell (2), a circulation channel (3) through which a heat medium circulates to exchange heat with the fuel cell (2), and a circulation pump (4) that delivers the heat medium to the circulation channel (3), the method **characterized by** comprising:
a first operation step for intermittently operating the circulation pump (4) during filling the circulation channel with water as a heat medium during a start of the fuel cell (2); and
a second operation step for intermittently operating the circulation pump (4) during electricity generation by the fuel cell (2),
wherein, when a stop time is defined as a predetermined time from an operation stop to an operation restart of the circulation pump (4) during an intermittent operation, a second stop time corresponding to the stop time of the second operation step is shorter than a first stop time corresponding to the stop time of the first operation step.

## Patentansprüche

1. Brennstoffzellensystem mit:
einer Brennstoffzelle (2);
einem Zirkulationskanal (3), durch den ein Wärmemedium zum Austausch von Wärme mit der Brennstoffzelle (2) zirkuliert;
einer Zirkulationspumpe (4), die das Wärmemedium dem Zirkulationskanal (3) zuführt; und
einer Steuerung (15), die die Zirkulationspumpe (4) steuert,
**dadurch gekennzeichnet, dass**
die Steuerung (15) eine erste Betriebsweise zum intermittierenden Betrieb der Zirkulationspumpe (4) während des Auffüllens des Zirkulationskanals mit Wasser als Wärmemedium während eines Anlaufs der Brennstoffzelle (2) und eine zweite Betriebsweise zum intermittierenden Betrieb der Zirkulationspumpe (4) während der Stromerzeugung durch die Brennstoffzelle (2) ausführt, und
wenn eine Stoppzeit als eine vorbestimmte Zeit von einer Unterbrechung des Betriebs bis zu einem Neustart des Betriebs der Zirkulationspumpe (4) während eines intermittierenden Betriebs definiert ist, die Steuerung (15) die erste Betriebsweise und die zweite Betriebsweise derart steuert, dass eine zweite Stoppzeit, die der Stoppzeit der zweiten Betriebsweise entspricht, kürzer ist als eine erste Stoppzeit, die der Stoppzeit der ersten Betriebsweise entspricht.

2. Brennstoffzellensystem nach Anspruch 1, wobei die Steuerung (15) die zweite Betriebsweise für eine vordefinierte Zeit nach einem Beginn einer Stromerzeugung durch die Brennstoffzelle (2) ausführt.

3. Brennstoffzellensystem nach Anspruch 1, wobei die Steuerung (15) die zweite Betriebsweise ausführt, wenn eine Abweichung der Fördermenge der Zirkulationspumpe (4) hervorgerufen wir.

4. Brennstoffzellensystem nach Anspruch 1, wobei die Steuerung (15) die zweite Betriebsweise ausführt, wenn nach Ausführung der zweiten Betriebsweise für eine vorbestimmte Zeit ab einem Beginn einer Stromerzeugung der Brennstoffzelle (2) eine Abweichung der Fördermenge der Zirkulationspumpe (4) hervorgerufen wird.

5. Betriebsverfahren für ein Brennstoffzellensystem, das eine Brennstoffzelle (2), einen Zirkulationskanal (3), durch den ein Wärmemedium zum Austausch von Wärme mit der Brennstoffzelle (2) zirkuliert, und eine Zirkulationspumpe (4) aufweist, die das Wärmemedium dem Zirkulationskanal (3) zuführt, wobei das Verfahren **gekennzeichnet ist durch**:
einen ersten Betriebsschritt zum intermittierenden Betrieb der Zirkulationspumpe (4) während des Auffüllens des Zirkulationskanals mit Wasser als Wärmemedium während eines Anlaufs der Brennstoffzelle (2); und
einen zweiten Betriebsschritt zum intermittierenden Betrieb der Zirkulationspumpe (4) während einer Stromerzeugung **durch** die Brennstoffzelle (2),
wobei, wenn eine Stoppzeit als eine vorbestimmte Zeit ab einer Unterbrechung des Betriebs bis zu einem Neustart des Betriebs der Zirkulationspumpe (4) während eines intermittierenden Betriebs definiert ist, eine zweite Stoppzeit, die der Stoppzeit des zweiten Betriebsschritts entspricht, kürzer ist als eine erste Stoppzeit, die der Stoppzeit des ersten Betriebsschritts entspricht.

## Revendications

1. Système de pile à combustible comprenant :
une pile à combustible (2),
un canal de circulation (3) au travers duquel circule un milieu calorifique destiné à échanger de la chaleur avec la pile à combustible (2),
une pompe de circulation (4) qui délivre le milieu calorifique au canal de circulation (3), et
un contrôleur (15) qui pilote la pompe de circulation (4),
**caractérisé en ce que** :
le contrôleur (15) effectue une première opération permettant d'opérer de façon intermittente la pompe de circulation (4) pendant le remplissage du canal de circulation avec de l'eau utilisée comme milieu calorifique pendant le démarrage de la pile à combustible (2), et une seconde opération destinée à opérer de façon intermittente la pompe de circulation (4) pendant la génération d'électricité réalisée par la pile à combustible (2), et
lorsqu'un instant d'arrêt est défini en tant qu'instant prédéterminé depuis un arrêt d'opération jusqu'à un redémarrage d'opération de la pompe de circulation (4) pendant un fonctionnement intermittent, le contrôleur (15) pilote la première opération et la seconde opération de sorte à ce qu'un second instant d'arrêt, correspondant à l'instant d'arrêt de la seconde opération, soit plus court qu'un premier instant d'arrêt correspondant à l'instant d'arrêt de la première opération.

2. Système de pile à combustible selon la revendication 1, dans lequel le contrôleur (15) effectue la seconde opération pendant une durée prédéterminée après le démarrage de la génération d'électricité réalisée par la pile à combustible (2).

3. Système de pile à combustible selon la revendication 1, dans lequel le contrôleur (15) effectue la seconde opération lorsqu'il est provoqué une anomalie de sortie de la pompe de circulation (4).

4. Système de pile à combustible selon la revendication 1, dans lequel le contrôleur (15) effectue en outre la seconde opération lorsqu'il est provoqué l'anomalie de sortie de la pompe de circulation (4) après l'exécution de la seconde opération pendant une durée prédéterminée depuis le démarrage de la génération d'électricité réalisée par la pile à combustible (2).

5. Procédé de fonctionnement d'un système de pile à combustible qui inclut une pile à combustible (2), un canal de circulation (3) au travers duquel circule un milieu calorifique destiné à échanger de la chaleur avec la pile à combustible (2) et une pompe de circulation (4) qui délivre le milieu calorifique au canal de circulation (3), le procédé étant **caractérisé en ce qu'**il comprend :
une première étape de fonctionnement destinée à opérer de façon intermittente la pompe de circulation (4) pendant le remplissage du canal de circulation avec de l'eau utilisée en tant que milieu calorifique pendant le démarrage de la pile à combustible (2), et
une seconde étape de fonctionnement destinée à opérer de façon intermittente la pompe de circulation (4) pendant la génération d'électricité réalisée par la pile à combustible (2),
dans lequel, lorsqu'un instant d'arrêt est défini en tant qu'instant prédéterminé depuis un arrêt d'opération jusqu'à un redémarrage d'opération de la pompe de circulation (4) pendant le fonctionnement intermittent, un second instant d'arrêt correspondant à l'instant d'arrêt de la seconde étape de fonctionnement est plus court qu'un premier instant d'arrêt correspondant à l'instant d'arrêt de la première étape de fonctionnement
